# EUROPÄISCHE PATENTSCHRIFT

(11) **EP 1 346 841 B1**
(45) Veröffentlichungstag und Bekanntmachung des Hinweises auf die Patenterteilung: **18.08.2004**
(21) Anmeldenummer: 03001753.7
(22) Anmeldetag: 28.01.2003
(51) Int. Cl.: B41M 5/00

(54) **Dispersion, Streichfarbe und Aufnahmemedium**
Dispersion, paint and recording medium
Dispersion, peinture et moyen d'enregistrement

(30) Priorität: 22.03.2002 DE 10212677; 22.03.2002 DE 10212679
(43) Veröffentlichungstag der Anmeldung: 24.09.2003
(73) Patentinhaber: Degussa AG, 40474 Düsseldorf (DE)
(72) Erfinder: Batz-Sohn, Christoph, Dr., 63454 Hanau (DE); Scharfe, Thomas, 63755 Alzenau (DE); Lortz, Wolfgang, Dr., 63607 Wächtersbach (DE)

(56) Entgegenhaltungen:
- EP-A- 0 879 709
- DE-C- 10 035 054
- US-B1- 6 284 819

## Beschreibung

Gegenstand der Erfindung ist eine wässerige Dispersion, welche mindestens zwei Pulverarten von Metall- und/oder Metalloidoxidpulver enthält. Gegenstand der Erfindung ist ferner eine Streichfarbe ausgehend von dieser Dispersion und ein Tintenstrahl-Aufnahmemedium.

Oberflächen von Aufnahmeträgern können mit Streichfarben beschichtet werden um ihre Druckeigenschaften zu verbessern. Von besonderer Bedeutung sind zum Beispiel Adsorption, Trockenzeiten und Haftung der Tinte, sowie der Glanz des Aufnahmemediums. Insbesonders für fotoartige Materialien stellen Glanz und hohe Tintenaufnahmefähigkeit wesentliche Merkmale dar.

Die Streichfarbe zur Erzeugung eines glänzenden Aufnahmeträgers umfasst in der Regel eine wässerige Dispersion von Pigmenten, wie hydratisiertes Aluminiumhydroxid, Aluminiumoxid, Siliciumdioxid (Silica), Titandioxid und ein Bindemittel, wie zum Beispiel Polyvinylalkohol, wobei die Pigmente in Form von Pulvern oder als Dispersion von Pulvern eingebracht werden.

Beschichtungen von hohem Glanz können zum Beispiel durch Silica-Feinteilchen erzielt werden. Nachteilig ist die oft geringe Stabilität und die hohe Viskosität, der für die Streichfarben verwendeten Dispersionen. So muß die Dispersion oft unmittelbar vor ihrer Weiterverarbeitung zur Streichfarbe hergestellt werden. Höher gefüllte Dispersionen lassen sich aufgrund der erhöhten Viskosität nur schwierig verarbeiten.

Der Füllgrad der Streichfarbe ist ein wichtiger Parameter für die Qualität des damit hergestellten Aufnahmemediums und die Wirtschaftlichkeit des Prozesses. Bei einer Streichfarbe mit hohem Füllgrad ist zur Erzielung eines bestimmten Auftragsgewichtes weniger Streichfarbe nötig als bei Streichfarben mit niedrigem Füllgrad. Hinzu kommt, dass bei hohem Füllgrad weniger Wasser verdampft werden muss und dadurch eine raschere Trocknung erfolgt. Damit ist der Prozess gegenüber einer Streichfarbe mit niedrigem Füllgrad wirtschaftlicher durchzuführen.

Ein hoher Glanz und ein gutes Tintenaufnahmevermögen kann auch verfahrenstechnisch erzielt werden, wenn die Streichfarbe mittels Gußstrichverfahren (Cast-Coating) aufgetragen wird. Dieses Verfahren ist jedoch relativ langsam und kostenintensiv.

In DE-A-100 35 054 werden kationisierte Silica-Feinteilchen mit einem Primärteilchendurchmesser von 50 nm oder weniger in einer wässerigen Dispersion eingesetzt um eine Streichfarbe herzustellen, die zu einem Aufnahmemedium von hohem Glanz sowie guter Tintenaufnahmefähigkeit führt.

In US 6,284,819 wird eine Streichfarbe mit einer bestimmten Viskosität beschrieben, die aus einer wässerigen Dispersion von zwei in ihrer Art und ihrer Größe unterschiedlichen Partikeln erhalten wird. Die erste Pulverart umfasst Metalloxidpartikel wie zum Beispiel Silica, kationisiertes Silica oder Aluminiumoxid. Die Größe ist definiert, als dass die erste Pulverart Aggregate von kleineren Primärteilchen umfasst, mit einer mittleren Primärteilchengröße von weniger als 100 nm und einer mittleren Aggregatgröße von 100 bis 500 nm. Ferner gilt, dass der mittlere Aggregatdurchmesser der Partikel der zweiten Pulverart mindestens um die Hälfte kleiner ist als der mittlere Aggregatdurchmesser der ersten Pulverart. Die zweite Pulverart umfasst Metalloxide und synthetische Polymere. Das Gewichtsverhältnis der Partikel von erster zu zweiter Pulverart liegt zwischen 9 und 91 Gew.-%. Mit der so definierten Streichfarbe kann ein Aufnahmemedium mit hohem Glanz und gutem Tintenaufnahmevermögen hergestellt werden. Dabei soll die erste Pulverart der Partikel für die Absorption von Flüssigkeit verantwortlich sein. Die kleineren Aggregate der zweiten Pulverart sollen Hohlräume ausfüllen. Insgesamt wird die Packungsdichte der Beschichtung erhöht. Wesentliches Merkmal ist, dass der mittlere Aggregatdurchmesser der Partikel der zweiten Pulverart mindestens um die Hälfte kleiner ist als der mittlere Aggregatdurchmesser der ersten Pulverart. Wie in den Ausführungsbeispielen gezeigt, wird die Streichfarbe erhalten, indem zu einer physikalischen Mischung von zwei wässerigen Dispersionen, eine Dispersion enthaltend die Partikel der ersten Pulverart, eine Dispersion enthaltend die Partikel der zweiten Pulverart, ein Bindemittel, wie zum Beispiel Polyvinylalkohol, gegeben wird. Offenbart in US 6,284,819 sind alle Kombinationen von Metalloxidpartikeln, unabhängig von ihrer spezifischen Oberflächenladung, bei einen gegebenen pH-Wert der Dispersion. Dies führt gegebenenfalls zu Dispersionen, die nicht stabil sind, rasch zum Gelieren neigen, und daher nur bedingt zur Herstellung einer Streichfarbe taugen.

Die Beispiele zeigen, dass ein hohes Interesse an Streichfarben und mit ihnen hergestellten Aufnahmemedien mit hohem Glanz, gutem Tintenaufnahmevermögen und raschen Trocknungszeiten besteht. Besondere Bedeutung kommt dabei den Dispersionen zu, die als Ausgangsmaterial für die Streichfarben dienen.

Die Aufgabe der Erfindung ist es daher eine Dispersion mit hohem Füllgrad und niedriger Viskosität bereitzustellen, die es erlaubt eine Streichfarbe herzustellen, die, wenn auf einen Aufnahmeträger aufgebracht, ein Aufnahmemedium ergibt, welches hohen Glanz, gutes Tintenaufnahmevermögen und ein gutes Trocknungsverhalten zeigt.

Die Aufgabe wird gelöst durch eine stabile, wässerige Dispersion enthaltend zwischen 20 und 80 Gew.-%, bezogen auf die Gesamtmenge der Dispersion, Metall- und/oder Metalloidoxidpulver,
- welche in Form von Aggregaten von Primärteilchen in der Dispersion vorliegen,
   - wobei der mittlere Durchmesser der Aggregate zwischen 10 nm und 300 nm und
   - der mittlere Durchmesser der Primärteilchen zwischen 5 und 50 nm liegt,
welche dadurch gekennzeichnet ist, dass
- das Pulver mindestens zwei Pulverarten umfasst,
   - wobei die Pulverarten bei gegebenem pH-Wert der Dispersion das gleiche Vorzeichen der Oberflächenladung aufweisen und
   - ein Zeta-Potential haben, das eine elektrostatische Abstoßung der Teilchen bewirkt, welche größer ist als die van-der-Waals Anziehung der Pulver und
   - die mittleren Durchmesser der Primärteilchen zwischen zwei Pulverarten sich mindestens um den Faktor 1,5 unterscheiden und
   - in der Dispersion der mittlere Aggregatdurchmesser der zweiten und weiterer Pulverarten 60 bis 150% der Größe der ersten Pulverart aufweist und
   - jede Pulverart zu wenigstens 1 Gew.-% in der Dispersion vorliegt.

Unter den Primärteilchen dieser Pulver sind die kleinsten, offensichtlich nicht weiter zerlegbaren Partikel im hochauflösenden TEM-Bildern zu verstehen. Mehrere Primärteilchen können sich an ihren Kontaktstellen zu Aggregaten zusammenlagern. Diese Aggregate sind durch Dispergiervorrichtungen entweder nur schlecht oder gar nicht mehr aufzulösen. Mehrere Aggregate können sich lose zu Agglomeraten zusammenfügen, wobei dieser Vorgang durch geeignete Dispergierung wieder rückgängig gemacht werden kann.

Unter dem mittleren Aggregatdurchmesser ist der Äquivalentkugeldurchmesser, angegeben als volumengewichteter Median-Wert der Peakanalyse, zu verstehen. Er wird für die verwendeten Pulver durch dynamische Lichtstreuung, zum Beispiel mit einem Gerät des Types Malvern Zetasizer 3000 HSa, bestimmt. Bei dieser Methode wird bei Vorhandensein verschiedener Pulver, deren mittlere Aggregatdurchmesser sich in einer Dispersion, jeweils getrennt bestimmt, sich zwischen 60 und 150 % in ihrer Größe unterscheiden, eine monomodale Verteilung gemessen. Das heißt die mittleren Aggregatdurchmesser eines Pulvers aus unterschiedlichen Pulverarten werden gleich groß bestimmt, wenn sie sich in ihrem Durchmesser zwischen 60 % und 150 % unterscheiden. Unterscheiden sich die mittleren Aggregatdurchmesser von zwei Pulvern in einer Dispersion um mehr als 60% oder mehr als 150 %, jeweils getrennt bestimmt, dann weist die Lichtstreuung eine bimodale Verteilung des Pulvergemisches aus. Diese Verteilung liegt ausserhalb des beanspruchten Bereiches.

Unter stabil ist zu verstehen, dass die Dispersion über einen Zeitraum von wenigstens einem Monat sich nicht absetzt und keinen Bodenkörper bildet. Dies bedeutet auch, dass die Dispersion transportiert werden kann und nicht unmittelbar vor der Anwendung erzeugt werden muss.

Unter wässerig ist zu verstehen, dass der Hauptbestandteil der flüssigen Phase Wasser ist.

Zum Erzielen einer stabilen Dispersion ist es wichtig, dass die in der Dispersion vorliegenden Partikel das gleiche Zeichen der Oberflächenladung aufweisen. Partikel mit dem gleichen Vorzeichen der Oberflächenladung werden sich abstossen. Wenn das Zeta-Potential ausreichend hoch ist, kann die abstoßende Kraft die van der Waals-Anziehung der Pulverpartikel überwinden und es kommt nicht zu einer Flockung oder Sedimentation der Partikel. Das Zeta-Potential ist ein Maß für die Oberflächenladung der Partikel. Es ist das Potential an der Scherebene innerhalb der elektrochemischen Doppelschicht Metalloxid- und/oder Metalloidoxidpartikel/Elektrolyt in der Dispersion. Das Zeta-Potential hängt u.a. von der Art des Partikels ab, zum Beispiel Siliciumdioxid, kationisiertes Siliciumdioxid oder Aluminiumoxid ab. Eine wichtige Größe im Zusammenhang mit dem Zeta-Potential ist der isoelektrische Punkt (IEP) für einen Partikel. Der IEP gibt den pH-Wert an, bei dem das Zeta-Potential Null ist. Der IEP liegt bei Aluminiumoxid oder kationisiertem Siliciumdioxid bei einem pH von ca. 9 bis 10, bei Siliciumdioxid bei unterhalb von pH 3,8.

Die Ladungsdichte an der Oberfläche kann beeinflusst werden durch Veränderung der Konzentration der potentialbestimmenden Ionen im umgebenden Elektrolyten. In denjenigen Dispersionen, in denen die Partikel saure oder basische Pulverarten auf der Oberfläche tragen, kann die Ladung durch Einstellen des pH-Wertes geändert werden. Je größer der Unterschied zwischen pH-Wert und IEP, desto stabiler ist die Dispersion.

Das Zeta-Potential kann beispielsweise bestimmt werden durch Messung des kolloidalen Vibrationsstroms (CVI) der Dispersion oder durch Bestimmung der elektrophoretischen Mobilität.

Die Anzahl der Pulverarten ist nicht beschränkt. Bevorzugt können zwei Pulverarten eingesetzt werden. Besonders bevorzugt können die zwei Pulverarten in einem gewichtsmäßigen Verhältnis von Pulverart 1 zu Pulverart 2 zwischen 10:90 und 90:10 vorliegen.

Die mittleren Primärteilchendurchmesser der Pulverarten können sich in einer bevorzugten Ausführungsform mindestens um den Faktor 2, in einer besonderen Ausführungsform mindestens um den Faktor 2,5, unterscheiden.

Der mittlere Aggregatdurchmesser der zweiten und weiterer Pulverarten kann in einer besonderen Ausführungsform 80 bis 120 % der Größe der ersten Pulverart aufweisen. Besonders bevorzugt ist ein annähernd gleich großer Aggregatdurchmesser der Pulverarten.

Die Metalloxid- und/oder Metalloid-Oxidpulver der Erfindung umfassen Siliciumdioxid, Aluminiumoxid, Titandioxid, Ceroxid und Zirkonoxid. Die Oberflächen dieser Pulver weisen saure oder basische Zentren auf. Die Herkunft der Metall- und Metalloidoxide ist nicht beschränkt. Bevorzugt werden flammenhydrolytisch hergestellte Metall- und Metalloidoxide für die erfindungsgemäße Dispersion eingesetzt. Besonders bevorzugt sind flammenhydrolytisch hergestelltes Siliciumdioxid und Aluminiumoxid. Unter flammenhydrolytisch ist die Hydrolyse von Metall- oder Metalloidverbindungen in der Gasphase in einer Flamme, erzeugt durch die Reaktion von einem Brenngas, bevorzugt Wasserstoff, und Sauerstoff, zu verstehen. Dabei werden zunächst hochdisperse, nicht poröse Primärteilchen gebildet, die im weiteren Reaktionsverlauf zu Aggregaten zusammenwachsen und diese sich weiter zu Agglomeraten zusammenlagern können. Die BET-Oberfläche dieser Primärteilchen liegt zwischen 5 und 600 m²/g.

Das flammenhydrolytisch hergestellte Siliciumdioxid kann auch in kationisierter Form eingesetzt werden. Dies kann durch Behandlung des flammenhydrolytisch hergestellten Siliciumdioxidpulvers mit einem kationischen, im Dispersionsmedium löslichen Polymer erfolgen. Bevorzugt kann ein Polymer mit einer massengemittelten Molmasse von weniger als 100 000 g/mol eingesetzt werden. Besonders bevorzugt ist der Bereich zwischen 2000 und 50000 g/mol.

Kationische Polymere können Polymere mit mindestens einer quaternären Ammoniumgruppe, Phosphoniumgruppe, einem Säureaddukt einer primären, sekundären oder tertiären Amingruppe, Polyethylenimine, Polydiallylamine oder Polyallylamine, Polyvinylamine, Dicyandiamidkondensate, Dicyandiamid-Polyamin-Cokondensate oder Polyamid-Formaldehyd-Kondensate sein.

Bevorzugt können solche ausgehend von einer Diallylammoniumverbindung sein, besonders bevorzugt solche ausgehend von einer Dialkyldiallylverbindung, die durch eine radikalische Cyclisierungsreaktion von Diallylaminverbindungen erhalten werden können und die Struktur 1 oder 2 aufweisen. Die Strukturen 3 und 4 stellen Copolymere ausgehend von Dialkyldiallylverbindungen dar.

Dabei stellen R₁ und R₂ ein Wasserstoffatom, eine Alkylgruppe mit 1 bis 4 C-Atomen, Methyl-, eine Ethyl-, eine n-Propyl, eine iso-Propyl, eine n-Butyl-, eine iso-Butyl oder eine tert.-Butylgruppe, wobei R₁ und R₂ gleich oder verschieden sein können. Ein Wasserstoffatom der Alkylgruppe kann ferner durch eine Hydroxygruppe substituiert sein. Y stellt eine radikalpolymerisierbare Monomereinheit, wie zum Beispiel Sulfonyl, Acrylamid, Methacrylamid, Acrylsäure, Methacrylsäure dar. X⁻ stellt ein Anion dar.

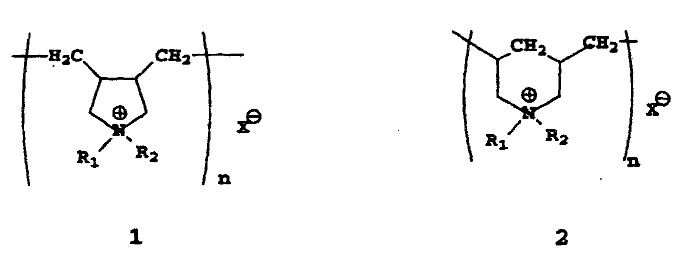

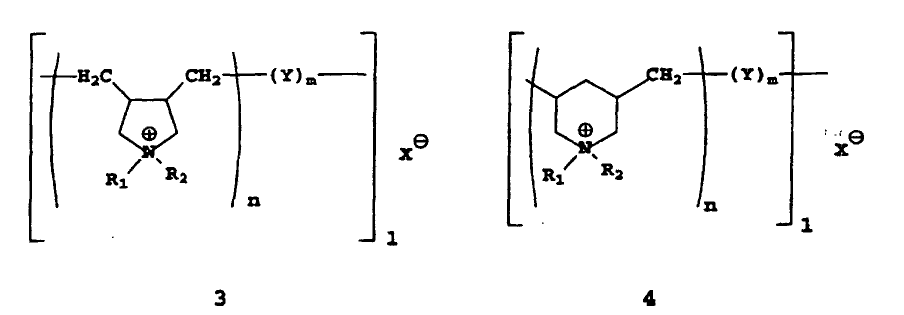

Exemplarisch sei genannt eine Poly(diallyldimethylammoniumchlorid)-Lösung (PDADMAC-Lösung in Wasser).

Der Gehalt an kationischem Polymer kann zwischen 0,1 und 15, bevorzugt zwischen 0,5 und 10, besonders bevorzugt zwischen 0,8 und 5 Gew.-%, bezogen auf die Menge aus kationischem Polymer und Siliciumdioxidpulver, betragen.

In einer vorteilhaften Weiterbildung der Erfindung kann mindestens eine Pulverart ein Mischoxidpulver sein. Als Mischoxidpulver können Pulver von wenigstens zwei Oxiden aus der Gruppe umfassend Siliciumdioxid, Aluminiumoxid, Titandioxid, Ceroxid oder Zirkonoxid, eingesetzt werden.

Unter Mischoxid ist die innige Vermischung der Oxidpulver auf atomarer Ebene unter Bildung von gemischten Sauerstoff-Metall/Metalloid-Bindungen, wie zum Beispiel Si-O-Al oder Si-O-Ti zu verstehen. Daneben können die Primärteilchen auch Bereiche aufweisen, in denen die Oxidpulver nebeneinander vorliegen, zum Beispiel Bereiche von Siliciumdioxid neben Aluminiumoxid.

Bevorzugt können flammenhydrolytisch hergestellte Mischoxidpulver eingesetzt werden. Hierbei werden die Vorläufersubstanzen der Mischoxide, getrennt oder gemeinsam, in einen Brenner überführt und dort in einer Flamme verbrannt, und die entstandenen Mischoxidpulver abgetrennt. Die Herstellung dieser Pulver ist zum Beispiel in EP-A-585 544, DE-A-199 19 635 (beide SiO2-Al2O3-Mischoxide) oder DE-A-4235996 (SiO2-TiO2-Mischoxid), beschrieben.

Die Erfindung umfasst auch dotierte Metall- oder Metalloidoxide, die nach der in DE-A-19650500 beschriebenen Methode hergestellt sind. Insbesonders das in DE-A-198 47 161 beschriebene Silicium-Aluminium-Mischoxid.

Die Erfindung umfasst ebenfalls Pulver mit einem Metall- oder Metalloidoxid als Kern, der vollständig oder teilweise mit einem davon verschiedenen Metall- oder Metalloidoxid umhüllt ist. Die Hülle kann in einem flüssigen Medium oder mittels eines Abscheidverfahrens aus einer dampfförmigen Vorstufe des Metall- oder Metalloidoxides aufgetragen werden.

In einer vorteilhaften Ausführungsform kann die Viskosität der erfindungsgemäßen Dispersion unterhalb eines Wertes von 1500 mPas bei einer Scherrate von 12 s⁻¹ und einer Temperatur von 23°C liegen. Besonders bevorzugt können Werte von kleiner als 1000 mPas bei einer Schergeschwindigkeit von 12 s⁻¹ und einer Temperatur von 23°C sein.

Die erfindungsgemäße Dispersion kann ferner Substanzen zur pH-Wert-Einstellung, wie Säuren, Basen oder Puffersysteme, Additive zur Stabilisierung der Dispersion, wie Salze, oberflächenaktive Stoffe, organische Lösungsmittel, Bakterizide und/oder Fungizide enthalten.

Ein weiterer Gegenstand der Erfindung ist ein Verfahren zur Herstellung der erfindungsgemäßen Dispersion, welches dadurch gekennzeichnet ist, dass die Pulverarten mittels einer Dispergiervorrichtung in einer wässerigen Dispersion getrennt voneinander dispergiert werden und anschließend vereinigt werden, oder dass die Pulverarten zunächst physikalisch vermischt und dann zusammen dispergiert werden, oder dass die Pulverarten portionsweise in Dispergiervorrichtung gegeben und dann zusammen dispergiert werden. Gegebenenfalls kann vor der Dispergierung eine Vordispergierung erfolgen.

Zur Vordispergierung eignen sich zum Beispiel Dissolver oder Zahnradscheibe. Zur Dispergierung eignen sich Rotor-Stator-Maschinen, wie Ultra Turrax (Firma IKA), oder solche der Firma Ystral, ferner Kugelmühlen, Rührwerkskugelmühlen. Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen.

Mit Hochdruckhomogenisatoren können wässerige Dispersionen mit mittleren Aggregatdurchmessern von kleiner als 100 nm erhalten werden. Bei diesen Vorrichtungen werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden um kleinere Teilchengrößen zu erhalten.

Ein weiterer Gegenstand der Erfindung ist eine Streichfarbe, welche die erfindungsgemäße Dispersion und wenigstens ein hydrophiles Bindemittel enthält.

Als Bindemittel können Polyvinylalkohol, teilweise oder vollständig verseift, sowie kationisierter Polyvinylalkohol mit einer primären, sekundären oder tertiären Aminogruppe oder einen tertiären Ammoniumgruppe an der Hauptkette oder an der Seitenkette Verwendung finden. Ferner können Kombinationen dieser Polyvinylalkohole untereinander und Polyvinylpyrrolidone, Polyvinylacetate, silanisierte Polyvinylalkohole, Styrol-Acrylat-Latices, Styrol-Butadien-Latices, Melamin-Harze, Ethylen-Vinylacetat-Copolymere, Polyurethan-Harze, synthetische Harze wie Polymethylmethacrylate, Polyesterharze (zum Beispiel ungesättigte Polyester-Harze), Polyacrylate, modifizierte Stärke, Kasein, Gelantine und/oder Cellulose-Derivate (zum Beispiel Carboxymethylcellulose) eingesetzt werden. Bevorzugt kann

Polyvinylakohol oder kationisierter Polyvinylakohol eingesetzt werden.

Weiterhin kann die Streichfarbe auch noch ein oder mehrere andere Pigmente wie Calciumcarbonate, Schichtsilikate, Aluminiumsilikate, Plastikpigmente (zum Beispiel Polystryrol, Polyethylen, Polypropylen), Kieselsäuren (zum Beispiel kolloidale Kieselsäuren, Fällungskieselsäuren, Kieselgele, kationisierte Abarten der genannten Kieselsäure-Verbindungen), Aluminium-Verbindungen (zum Beispiel Aluminiumsole, kolloidale Aluminiumoxide und deren Hydroxy-Verbindungen, wie Pseudoboehmite, Boehmite, Aluminiumhydroxid), Magnesiumoxid, Zinkoxid, Zirkonoxid, Magnesiumcarbonate, Kaolin, Clay, Talkum, Calciumsulfat, Zinkcarbonat, Satinweiß, Lithopone, Zeolithe enthalten.

Die Streichfarbe kann einen Gehalt an Metall- und/oder Metalloidoxidpulver zwischen 10 und 60 Gew.-% aufweisen. Bevorzugt kann er größer 15 Gew.-%, besonders bevorzugt kann er größer 25 Gew.-% sein.

Die Streichfarbe kann ferner einen Anteil an Bindemittel, bezogen auf die Metall- und/oder Metalloidoxidpulver, aufweisen, der zwischen 3 und 150 Gew.-% liegt. Bevorzugt kann er zwischen 10 und 40 Gew.-%, besonders bevorzugt kann er zwischen 3 und 15 Gew.-% liegen.

Zur Erhöhung der Wasserfestigkeit des Bindersystems und somit der Beschichtung können Vernetzer dienen wie Zirkonoxide, Borsäure, Melaminharze, Glyoxal und Isocyanate und andere Moleküle, die die Molekülketten des Bindersystems miteinander verbinden.

Des weiteren können Hilfsmittel wie optische Aufheller, Entschäumer, Netzmittel, pH-Puffer, UV- Absorber und Viskositätshilfsmittel eingesetzt werden.

Ein weiterer Gegenstand der Erfindung ist die Herstellung der Streichfarbe, welche dadurch gekennzeichnet ist, dass zu einer wässerigen Lösung des hydrophilen Bindemittels, der gegegebenenfalls noch weitere Additive zugesetzt sein können, unter Rühren die erfindungsgemäße Dispersion zugegeben und gegebenenfalls verdünnt wird, bis sich das gewünschte Verhältnis von Metall- und/oder Metalloidoxidpulver und Binder und der gewünschte Gesamtfeststoffgehalt einstellt. Die Reihenfolge der Zugabe ist dabei nicht wesentlich. Gegebenenfalls wird für eine bestimmte Zeitdauer nachgerührt und falls erforderlich danach im Vakuum entlüftet. Unter Additiven sind zum Beispiel Pigment, Vernetzer, optische Aufheller, Entschäumer, Netzmittel, pH-Puffer, UV- Absorber und Viskositätshilfsmittel zu verstehen.

Ein weiterer Gegenstand der Erfindung ist eine Tintenaufnahmeschicht unter Verwendung der erfindungsgemäßen Streichfarbe und eines Trägers. Als Träger können zum Beispiel Papier, beschichtetes Papier, Harzfolien, wie ein Polyesterharz, einschliesslich Polyethylenterephthalat, Polyethylennaphthalat, ein Diacetatharz, ein Triacetatharz, ein Acrylharz, ein Polycarbonatharz, ein Polyvinylchlorid, ein Polyimidharz, Celluphan, Celluloid und eine Glasplatte eingesetzt werden.

Bevorzugt sind sogenannte Fotobasispapiere, d.h. Papiere, auf denen eine/oder mehrere Lagen Polyethylenfolie auf Vorder- und oder Rückseite aufgebracht worden ist. Desweiteren Polyesterfolie, PVC-Folie oder vorbeschichtete Papiere.

Das erfindungsgemäße Aufnahmemedium umfasst auch Medien, bei denen die tintenaufnehmende Schicht aus mehreren Beschichtungslagen des gleichen Typs oder anderen Lagen besteht. Die erfindungsgemäße Streichfarbe kann sich nur in einer oder mehreren Schichten befinden. So können zum Beispiel noch weitere tintenabsorptive Beschichtungen wie Schichten, die Fällungskieselsäure enthalten, unter der erfindungsgemäßen Streichfarbe aufgebracht werden. Es können desweiteren eine oder mehrere Polymerlagen (zum Beispiel Polyethylen) auf dem Substrat und/oder auf der erfindungsgemäßen Beschichtung aufgebracht werden, um die mechanische Stabilität und/oder den Glanz in der Beschichtung zu erhöhen (zum Beispiel Fotobasispapier, Laminierung).

Die Träger können transparent oder opak sein. Die Dicke des Trägers ist nicht limitiert, bevorzugt werden Dicken zwischen 50 und 250 µm verwendet.

Ein weiterer Gegenstand der Erfindung ist die Herstellung eines Aufnahmemediums, welche dadurch gekennzeichnet ist, dass die Streichfarbe auf den Träger aufgebracht und getrocknet wird. Das Aufbringen der Streichfarbe kann mit allen üblichen Auftragsverfahren, wie Walzenauftrag, Schaberegalisierung (Blade-coating), Luftbürste, Rakel (profiliert, glatt, Spalt), Guss-Strich-Verfahren, Filmpresse, Leimpresse, Vorhanggieß-Verfahren (curtain-coating) und Schlitzdüsen-Auftrag (zum Beispiel Gießrakel, slot-dye) und Kombinationen hieraus aufgebracht werden. Bevorzugt werden Verfahren eingesetzt, die eine sehr homogene Beschichtung ermöglichen, wie zum Beispiel Cast-coating, Vorhanggieß-Verfahren und Schlitzdüsen-Auftrag.

Das beschichtete Substrat kann mit allen üblichen Verfahren wie Luft- oder Konvektionstrocknung (zum Beispiel Heißluftkanal), Kontakt- oder Konduktionstrocknung, Energiestrahlentrocknung (zum Beispiel Infrarot und Microwellen) getrocknet werden.

Es ist überraschend, dass die erfindungsgemäßen Dispersionen einen hohen Füllgrad bei niedriger Viskosität und die damit hergestellten Streichfarben einen hohen Glanz aufweisen. In US 6,284,819 wird eine Streichfarbe aus einer wässerigen Dispersion erhalten, die zwei Pulverarten von Aggregaten enthält, wobei die Aggregatdurchmesser der einen Pulverart mindestens 50 % kleiner sind als die der zweiten Pulverart. Bevorzugt ist, dass die Aggregatdurchmesser der zweiten Pulverart noch wesentlich kleiner sind, zum Beispiel kleiner als 20 nm. Dabei soll die Pulverart mit den größeren Aggregatdurchmessern für die Absorption von Flüssigkeit verantwortlich sein, die kleineren Aggregatdurchmesser der zweiten Pulverart sollen Hohlräume ausfüllen. Insgesamt wird die Packungsdichte der Beschichtung erhöht.

Bei der erfindungsgemäßen Dispersion und Streichfarbe hingegen dürfen im Gegensatz zu US 6,284,819 die Unterschiede in den Aggregatdurchmesser der einzelnen Pulverarten nicht kleiner sein als 60% der größeren Aggregate. Besonders bevorzugt ist ein gleicher Durchmesser der Aggregate.

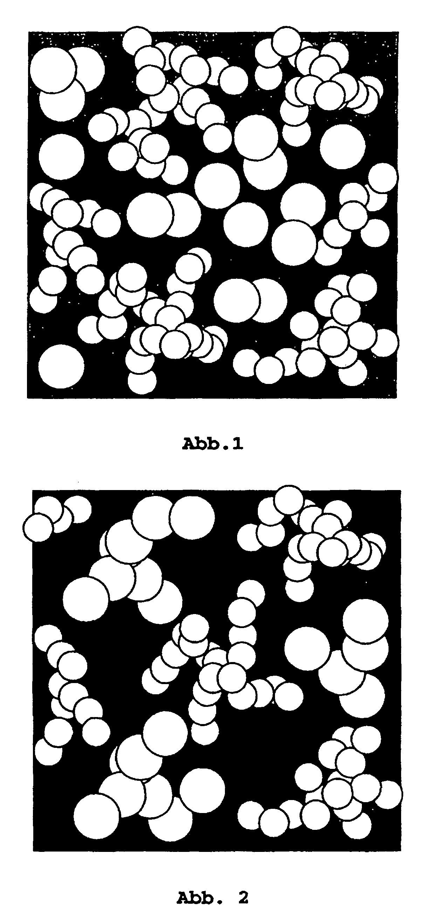

Eine Erklärung der sehr guten Eigenschaften der erfindungsgemäßen Dispersion und Streichfarbe kann derzeit nicht gegeben werden. Eine mögliche Interpretation liefern Abb. 1 und Abb. 2.

Abb. 1 zeigt eine Anordnung von zwei Aggregaten unterschiedlich großer Primärteilchen in einer Dispersion. Dabei weisen die Aggregate mit der niedrigeren BET-Oberfläche einen halb so großen Durchmesser auf wie die Aggregate mit der kleineren BET-Oberfläche. Abb. 1 entspricht dem in US 6,284,819 geschilderten Sachverhalt. Abb. 1 verdeutlicht den hohen Füllgrad der Dispersion, der sich jedoch negativ auf das Porenvolumen auswirkt, was schlechtere Bildeigenschaften zur Folge hat.

Abb. 2 zeigt die Situation bei der erfindungsgemäßen Dispersion mit zwei Sorten von Aggregaten, wobei beide Sorten die selbe Aggregatgröße, allerdings unterschiedliche Primärteilchengrößen, haben. Hier werden große Poren bei hohem Füllgrad gebildet.

### Anwendungsbeispiele

**Analytische Verfahren:** Die Viskosität der Dispersionen wird bestimmt mit einem Gerät MCR300 mit Messsystem CC27, Fa. Parr-Physica, wobei bei Scherraten zwischen 0,01 bis 100 s⁻¹ gemessen wird. Angegeben wird die Viskosität bei 12 s⁻¹ und 23°C. Die Viskosität der Streichfarben wird mit einem Brookfield RVT Rotationsviskosimeter bei 100 s-1 und bei 23 °C bestimmt.

Das Zeta-Potential wird bestimmt mit einem Gerät des Typs DT-1200 der Fa. Dispersion Technology Inc., nach dem CVI-Verfahren.

Die Aggregatgröße wird mittels dynamischer Lichtstreuung bestimmt. Verwendet wurde das Gerät Zetasizer 3000 HSa (Malvern Instruments, UK). Angegeben wird der volumengewichtete Median-Wert der Peakanalyse.

Die mittlere Primärteilchengrößen der verwendeten Pulver sind mittels Transmissionselektronenmikroskopie (TEM) bestimmt.

**Pulver**: Als Pulver werden pyrogen hergestellte Siliciumdioxide (Aerosil®) und pyrogen hergestellte Aluminiumoxide (VP Alu) der Fa. Degussa AG, kolloidal hergestelltes Siliciumdioxid (Ludox®) der Fa. DuPont, Silicium-Aluminium-Mischoxide (MOX, DOX) der Degussa AG verwendet. (**Tab. 1**).

**Dispersionen**: Die analytischen Daten der Dispersionen sind in Tabelle 2 aufgeführt.

Als Dispergiermedium wird für die angegebenen Beispiele vollentsalztes Wasser verwendet. Als Kationisierungsagenz für die Kieselsäuredispersionen wird Polyquat 40U05NV der Firma Katpol GmbH, mit einem Poly-DADMAC-Wirkstoffgehalt von 40 Gew.-% verwendet. Zum Dispergieren wird im Großmaßstab der Inline-Dispergator Conti-TDS 3 der Firma Ystral, verwendet. Dieses Rotor/Stator-System wird standardmäßig bei 3000 U/min betrieben. Die Labordispersionen werden mittels Ultra-Turrax XY der Firma IKA, bei 7000 U/min hergestellt ("UT"). Deutlich höhere Scherenergien wurden in Einzelfällen (Dispersionen 2 und 10) mit der Nassstrahlmühle Ultimaizer HJP-25050 der Firma Sugino, Japan erzielt. Verwendet wurden 0,3 mm Diamantdüsen bei Drücken bis 2500 bar. Für diese Maschine wird die benötigte Vordispersion mit der Conti-TDS erzeugt.

### Dispersion 1 (D1) (Vergleichsbeispiel): Aerosil® 200 und kationisches Polymer, niedrige Scherenergie

In 31,7 kg Wasser werden 2,4 kg Polyquat gelöst und anschließend über den Saugstutzen der Conti-TDS innerhalb von 25 min 7,7 kg Aerosil® 200 dispergiert. Die Dispersion wird noch 5 min nachdispergiert. Die Dispersion ist beim erzielten Feststoffgehalt von 18,4 Gew.-% zähflüssig. Es kann kein weiteres Pulver mehr eingetragen werden. Diese Dispersion ist wegen ihrer hohen Viskosität ungeeignet zur Streichfarbenherstellung.

### Dispersion 2 (D2) (Vergleichsbeispiel): Aerosil® 200 und kationisches Polymer, hohe Scherenergie

Die Dispersion D1 wird bei 1000 bar mit Hilfe der Nassstrahlmühle weiter geschert. Dabei sinkt die Viskosität so weit, dass mit der Conti-TDS weitere 2,3 kg Aerosil® 200 eingetragen werden können und ein Feststoffgehalt von 22,6 Gew.-% erzielt wird. Die Dispersion wird zum Schluss einmal bei 2000 bar im Ultimaizer geschert. Eine weitere Erhöhung des Feststoffgehalts ist nicht möglich.

### Dispersion 3 (D3) (Vergleichsbeispiel): Aerosil® 130 und kationisches Polymer, niedrige Scherenergie

In 1085 g Wasser werden 25,4 g Polyquat gelöst und unter Scherbedingungen (UT) 390 g Aerosil® 130 eingetragen. Man läßt 30 min nachdispergieren. Man erhält einen Feststoffgehalt von 26 Gew.-%. Eine weitere Erhöhung des Feststoffgehalts ist nicht möglich. Diese Dispersion ist wegen ihrer hohen Viskosität ungeeignet zur Streichfarbenherstellung.

### Dispersion 4 (D4) (Vergleichsbeispiel): Aerosil® 130, Aerosil® 200 und kationisches Polymer

In 1110 g Wasser werden 30,0 g Polyquat gelöst und unter Scherbedingungen (UT) abwechselnd in kleine Portionen 180 g Aerosil® 130 und 180 g Aerosil® 200 eingetragen. Man läßt 30 min nachdispergieren. Man erhält einen Feststoffgehalt von 24 Gew.-%. Eine weitere Erhöhung des Feststoffgehalts ist nicht möglich. Diese Dispersion ist wegen ihrer hohen Viskosität ungeeignet zur Streichfarbenherstellung.

### Dispersion 5 (D5): Aerosil® 90, kolloidales Silica (Ludox®)

In 525 g Wasser werden etwas KOH gelöst, sodass sich ein pH-Wert von 11,0 ergibt. Darin werden unter Scherbedingungen (UT) 225 g Aerosil® 90 eingetragen und 30 min nachdispergiert. Es resultiert eine Dispersion mit einem Feststoffgehalt von 30 Gew.-% und einem pH-Wert von 9,5 und einem Zetapotential von -41 mV. Die Aggregatgröße wird zu 170 nm bestimmt.

Eine kolloidale Kieselsäure (Silica Ludox®, Fa. DuPont) ist in Form einer 50 prozentigen wässerigen Dispersion bei pH 9,5 erhältlich. Das Zetapotential wird zu -38 mV bestimmt. Die Teilchengröße wird zu 25 nm bestimmt.

Es wird eine 1:1 Mischung beider Dispersionen hergestellt, die einen Feststoffgehalt von 40 Gew.-%, und einen pH-Wert von 9,5 hat. Die Teilchengrößenanalyse liefert eine bimodale Verteilung mit Peaks bei 29 nm und 168 nm.

### Dispersion 6 (D6): Aerosil® OX 50, Aerosil® 200 und kationisches Polymer

Analog zu D4, mit dem Unterschied, dass 1025 g Wasser, 25,0 g Polyquat, 112,5 g Aerosil® 300 und 337,5 g Aerosil® OX50 verwendet wurden. Es wird ein Feststoffgehalt von 30 Gew.-% erreicht.

### Dispersion 7 (D7): Aerosil® 130, Aerosil® OX 50 und kationisches Polymer

Analog zu D4, mit dem Unterschied, dass 1033 g Wasser, 17,3 g Polyquat, 150 g Aerosil® 130 und 300 g Aerosil® OX50 verwendet wurden. Es wird ein Feststoffgehalt von 30 Gew.-% erreicht.

### Dispersion 8 (D8): Aerosil® 200, Aerosil® OX 50 und kationisches Polymer

Analog zu D4, mit dem Unterschied, dass 1027,5 g Wasser, 22,5 g Polyquat, 150 g Aerosil® 200 und 300 g Aerosil® OX50 verwendet wurden. Es wird ein Feststoffgehalt von 30 Gew.-% erreicht.

### Dispersion 9 (D9): Aerosil® 380, Aerosil® 200, Aerosil® OX50 und kationisches Polymer

Analog zu D4, mit dem Unterschied, dass 1021 g Wasser, 28,8 g Polyquat, 46 g Aerosil® 380 und, 104 g Aerosil® 200 und 300 g Aerosil® OX50 verwendet wurden. Es wird ein Feststoffgehalt von 30 Gew.-% erreicht.

### Dispersion 10 (D10): VP Alu 1 und VP Alu 130

In 23,9 kg Wasser werden über den Saugrüssel der Conti-TDS zunächst 8 kg VP Alu 1 eingetragen, wobei durch Zugabe von halbkonzentrierter Essigsäure der pH-Wert auf pH 4,5 eingestellt wird. Anschliessend werden 8 kg VP Alu 130 auf die gleiche Weise eingetragen. Es ergibt sich ein Feststoffgehalt von 40 Gew.-%.

### Dispersion 11 (D11): Aerosil® OX50, Aerosil® 300, kationisches Polymer

In 34 kg Wasser werden 1,8 kg Polyquat gelöst und anschließend über den Saugrüssel der Conti-TDS zunächst 8,8 kg Aerosil® OX50 dosiert. Anschließend werden auf gleiche Weise insgesamt 10,45 kg Aerosil® 300 dosiert, wobei nach 4 kg davon die Nassstrahlmühle bei 1000 bar als zusätzliches Scheraggregat parallel geschaltet wird, um die ansteigende Viskosität weiter zu drücken. Anschließend läßt man auf gleiche Weise noch 15 min nachscheren. Insgesamt erreicht man auf diese Weise einen Feststoffgehalt von 35 Gew.-%.

### Dispersion 12 (D12): VP Alu 1, Aerosil® 300 und kationisches Polymer

Analog zu D4, mit dem Unterschied, dass 951,5 g Wasser, 23,5 g Polyquat, 300 g VP Alu 1 und 225 g Aerosil® 300 verwendet wurden. Es wird ein Feststoffgehalt von 35 Gew.-% erreicht.

Die Beispiele zeigen, dass die erfindungsgemäßen Dispersionen D5 bis D11 bei hohem Feststoffgehalt eine niedrige Viskosität aufweisen. Die Vergleichsbeispiele D1 bis D4 weisen bei einem niedrigeren Feststoffgehalt eine deutliche höhere Viskosität auf. D1, D3 und D4 sind zur Herstellung von Streichfarben nicht, D2 nur eingeschränkt geeignet.

Die Dispersionen D13 bis D20 beinhalten Mischoxidpulver. Die analytischen Daten der Dispersionen sind in Tab. 3 wiedergegeben.

### Dispersion 13 (D13): DOX 110, AE 380, kationisches Polymer

### Dispersion 13A (D13A): In 35 kg Wasser werden 1,38 kg

Polyquat gelöst und innerhalb von 45 min über den Saugrüssel der Conti-TDS insgesamt 36,5 kg DOX 110 eingetragen. Man erhält eine stabile Dispersion mit 50% Feststoffgehalt, pH 2,96. Die Aggregatgröße beträgt 113 nm.

**Dispersion 13B (D13B):** In 1143 g Wasser werden 57,0 g Polyquat gelöst und unter Scherbedingungen (UT) insgesamt 300 g Aerosil® 380 eingetragen. Man läßt 30 min nachdispergieren und erhält eine 20%ige Dispersion, pH 2,94. Die Aggregatgröße beträgt 163 nm.

**Dispersion 13 (D13)**: Die Dispersionen D13A und D13B werden jeweils in unterschiedlichen Verhältnissen derart gemischt, dass sich in einer Probenflasche zusammen 100 g Mischdispersion ergeben. Man schüttelt eine Minute kräftig, läßt eine Stunde ruhen und bestimmt die Viskositäten.

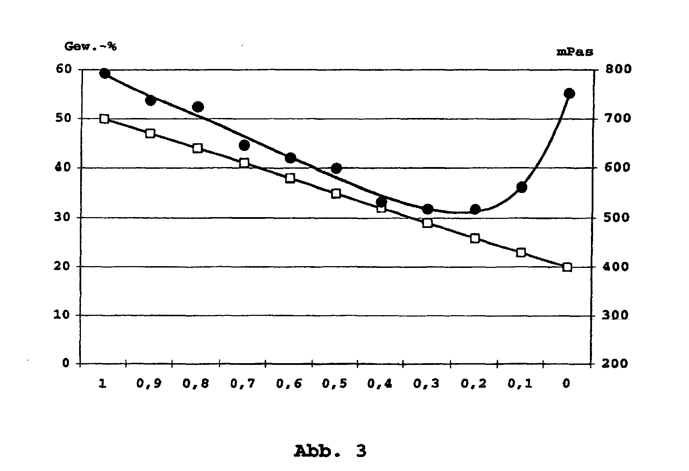

Die analytischen Werte dieser Dispersionen sind in Tab. 4 und Abb. 3 wiedergegeben. Abb. 3 zeigt die Abhängigkeit des Feststoffgehaltes in Gew.-% in der Dispersion, gekennzeichnet mit □, und der Viskosität in mPa s, gekennzeichnet mit ●, vom Anteil des Mischoxides, bezogen auf die Summe von DOX 110 und AE 380. 1 entspricht demnach, dass in der Dispersion nur DOX 110 als Feststoff vorliegt, während 0 bedeutet, dass nur AE 380 vorliegt.

Es ist festzustellen, dass alle Mischungen eine niedrigere Viskosität besitzen als die beiden Ausgangsdispersionen mit einem Minimum bei ca. 30 Gew.-% Feststoffgehalt und einer mittleren BET-Oberfläche von ca. 200 m²/g.

### Dispersion 14 (D14): DOX 110, AE 300, kationisches Polymer

Analog zu D4, mit dem Unterschied, dass 1022g Wasser, 28,0 g Polyquat, 112,5 g Aerosil® 300 und 337,5 g DOX 110 verwendet wurden. Es wird ein Feststoffgehalt von 30 Gew.-% erreicht.

### Dispersion 15 (D15): DOX 110, MOX 300, kationisches Polymer

Analog zu D14, mit dem Unterschied, dass statt Aerosil® 300 MOX 300 verwendet wurde. Es wird ein Feststoffgehalt von 30 Gew.-% erreicht.

### Dispersion 16 (D16): MOX 170, DOX 110, kationisches Polymer

Analog zu D4, mit dem Unterschied, dass 942 g Wasser, 33,0 g Polyquat, 300 g MOX 170 und 225 g DOX 110 verwendet wurden. Es wird ein Feststoffgehalt von 35 Gew.-% erreicht.

### Dispersion 17 (D17): DOX 110, AE 200, kationisches Polymer

Analog zu D4, mit dem Unterschied, dass 1021 g Wasser, 28,8 g Polyquat, 46 g Aerosil® 380 und, 104 g Aerosil® 200 und 300 g DOX 110 verwendet wurden. Es wird ein Feststoffgehalt von 30 Gew.-% erreicht.

### Dispersion 18 (D18): DOX 110, AE 380, kationisches Polymer

**Dispersion 18A (D18A):** In 42 kg Wasser werden 2 kg Polyquat gelöst und anschließend über den Saugrüssel der Conti-TDS 9 kg DOX 110 und 9 kg Aerosil® 380 eingetragen. Man erhält eine 30 prozentige Dispersion.

**Dispersion 18B (D18B):** 50 kg der Dispersion D18A werden mit Hilfe der Nassstrahlmühle in insgesamt 5 Durchgängen bei 2500 bar geschert. Dabei sinkt die Viskosität von anfangs 180 mPas auf 9 mPas.

**Dispersion D18C (D18C)**: In 40 kg der Dispersion D18B werden weitere 2 kg Polyquat gelöst. Anschließend werden in einer Kreisfahrweise unter ständigem Scheren mit Conti-TDS und Nassstrahlmühle bei 2500 bar jeweils weitere 7 kg DOX 110 und 7 kg Aerosil® 380 eingesogen. Man erreicht einen Feststoffgehalt von 46,5 Gew.-%.

### Dispersion 19 (D19): DOX 110, AE 300, kationisches Polymer

Analog zu D18A, mit dem Unterschied, dass 6 kg DOX 110 und 12 kg Aerosil® 300 verwendet werden, so dass sich ein Feststoffgehalt von 30 Gew.-% ergibt.

### Dispersion 20 (D20): DOX 110, AE 200, kationisches Polymer

Analog zu D19, mit dem Unterschied, dass Aerosil® 200 statt Aerosil® 300 und lediglich 1,4 kg Polyquat verwendet werden, so dass sich ein Feststoffgehalt von 30 Gew.-% ergibt.

### Streichfarben

**Rezeptur:** Eine wässerige Polyvinylalkohol-Lösung (PVA Mowiol 40-88, Fa. Clariant) mit 12,33 % Feststoffgehalt wird in einem Becherglas vorgelegt und mit der Menge Wasser versetzt, so daß nach Zugabe der Dispersion D(n), eine Streichfarbe mit dem gewünschten Feststoffgehalt erhalten wird. Dabei wird zu der mit Wasser versetzten Polyvinylalkohol-Lösung die jeweilige Dispersion unter Rühren mit einer Dissolverscheibe bei 500 Umdrehungen pro Minute (UPM) hinzugefügt. Nach Beendigung der Zugabe läßt man noch 30 Minuten bei 500 Umdrehungen pro Minute nachrühren. Danach werden die Streichfarben mit Hilfe eines Exsikkators und einer Wasserstrahlpumpe entlüftet.

Ausgehend von den Dispersionen D2,D6, D10, D11, D18, D19 und D20 werden Streichfarben hergestellt. Die Streichfarben S(n) enthalten 100 Teile der Dispersion D(n), bezogen auf den Feststoff in der Dispersion, und x Teile PVA Mowiol 40-88. Die Zusammensetzung und analytische Daten der Streichfarben sind in Tab. 5 angegeben. Der Index A bezieht sich auf sich auf die später beschriebene Beschichtung von Folien, der Index B auf die Beschichtung von Papier.

Aus den Viskositätswerten kann man erkennen, daß die aus den Dispersionen D6, D10 und D11 erhaltenen Streichfarben S6-A,B, S10-A,B und S11-A,B eine geringere Viskosität bei höherem Feststoffgehalt besitzen, als die nach dem Stand der Technik erhaltenen S2-A,B. S6-B weist eine etwas höhere Viskosität als S2-A auf, jedoch bei einem deutlich höheren Feststoffgehalt.

### Tintenaufnehmende Medien

Die Streichfarben mit dem Index A werden mit Hilfe von Naßfilmspiralrakeln auf eine 100 Micrometer dicke, unbehandelte Polyesterfolie (Firma Benn) appliziert. Die Trocknung erfolgt mit einem Haarfön. Das erhaltene Auftragsgewicht der Streichfarben mit Index A beträgt 25 g/m².

Die beschichteten Folien werden mit einem Epson Stylus Color 980 mit den Einstellungen Photo Quality Glossy Film, 1440 dp, Kalibrierung Epson, Gamma (D): 1,8 mit einer einem internen Testbild bedruckt.

Die Streichfarben mit Index B werden mit Hilfe von Naßfilmspiralrakeln auf ein mattes Inkjet-Papier (Fa. Zweckform, No. 2576) appliziert. Die Trocknung erfolgt mit einem Haarfön. Anschließend wird das beschichtete Papier bei 10 bar Druck und 50 °C mit Hilfe eines Laborkalanders satiniert. Das erhaltene Auftragsgewicht der Streichfarben mit Index B beträgt 13 g/m².

Die beschichteten Papiere werden mit einem Epson Stylus Color 980 mit den Einstellungen Premium Glossy Photo Paper, 1440 dpi, bidirektional, Kalibrierung Epson, Gamma (D): 1,8 mit einer einem internen Testbild bedruckt.

Der visuelle Glanz-, Haftungs- und Testbildeindruck der hergestellten tintenaufnehmenden Medien sind in Tab. 6 wiedergegeben. Die Aufnahmemedien nach dem Stand der Technik (M2-A,B) weisen bei Glanz und Haftung gute bis befriedigende Werte, bei Testbildeindruck sogar sehr gute Werte auf, das Trocknungsverhalten jedoch ist sehr schlecht. Die erfindungsgemäßen Medien weisen für Glanz, Haftung, Testausdruck gute bis sehr gute Werte auf. Das Trocknungsverhalten ist bei den erfindungsgemäßen Aufnahmemedien gegenüber den Medien nach dem Stand der Technik deutlich überlegen.

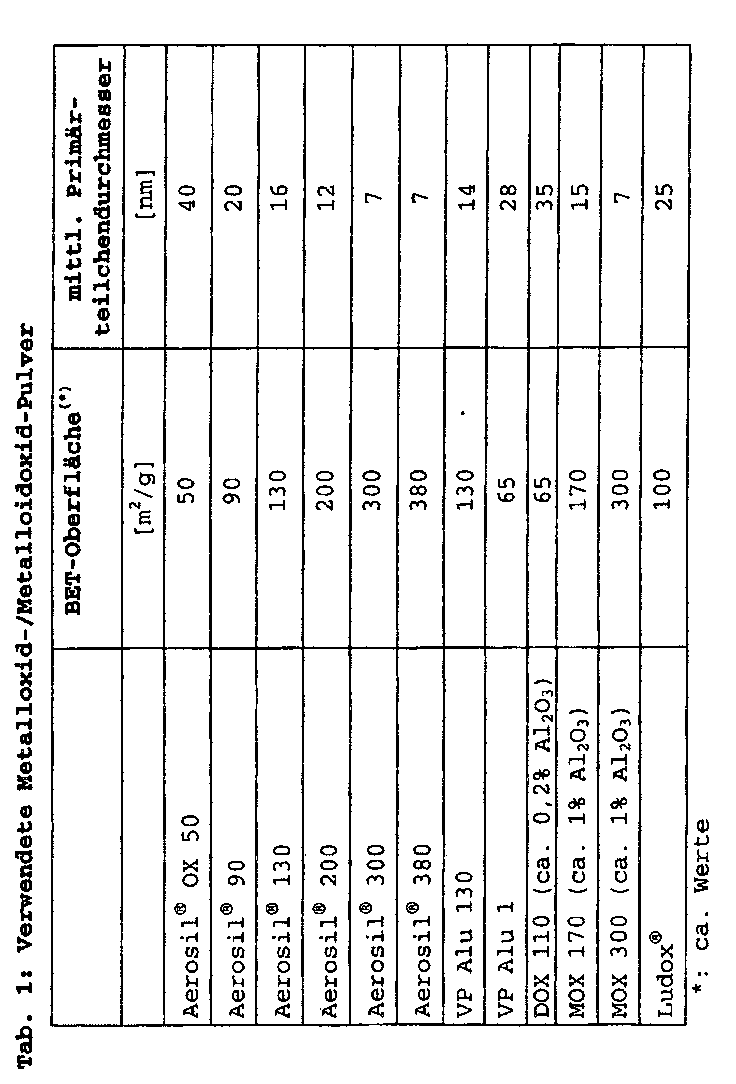

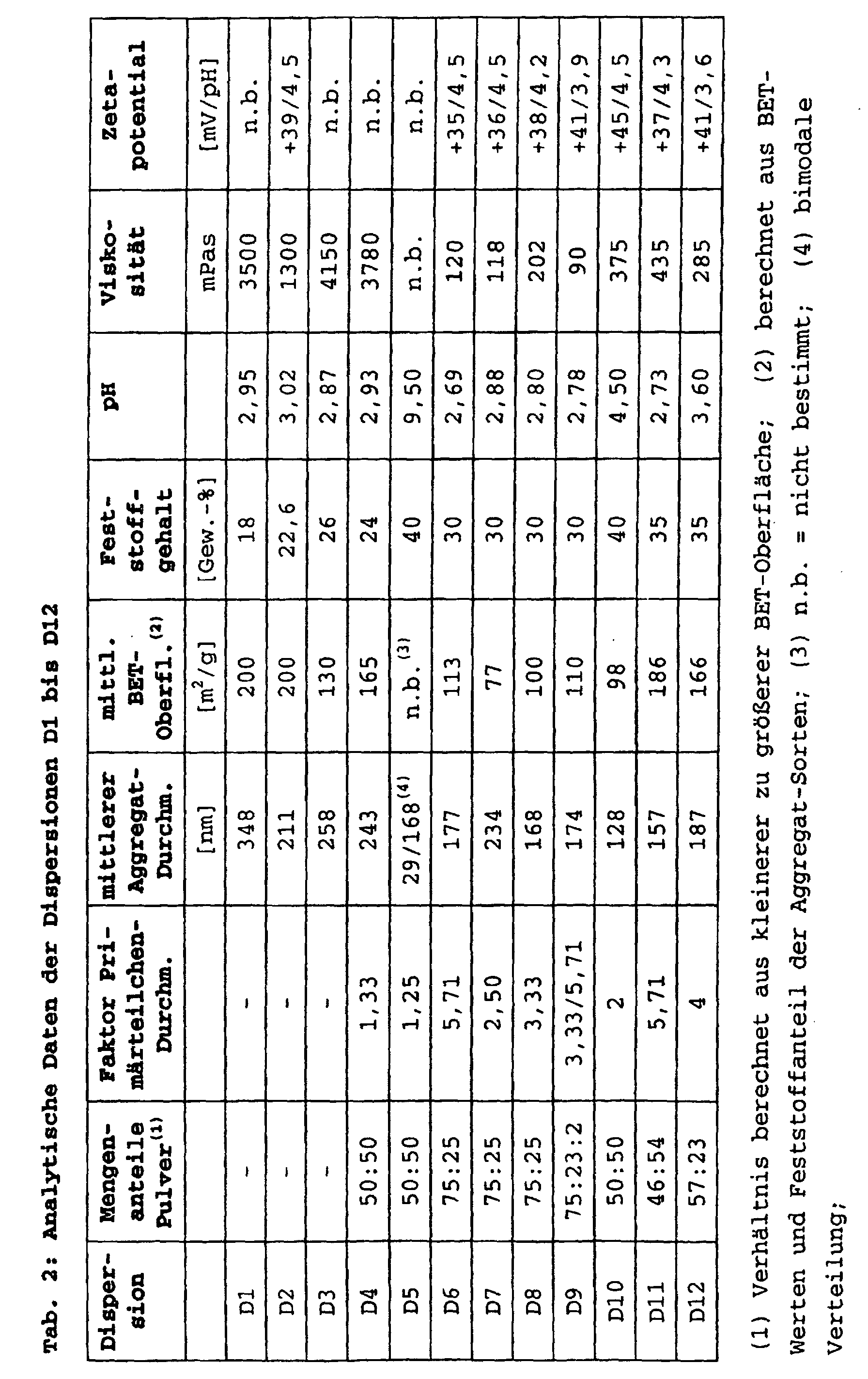

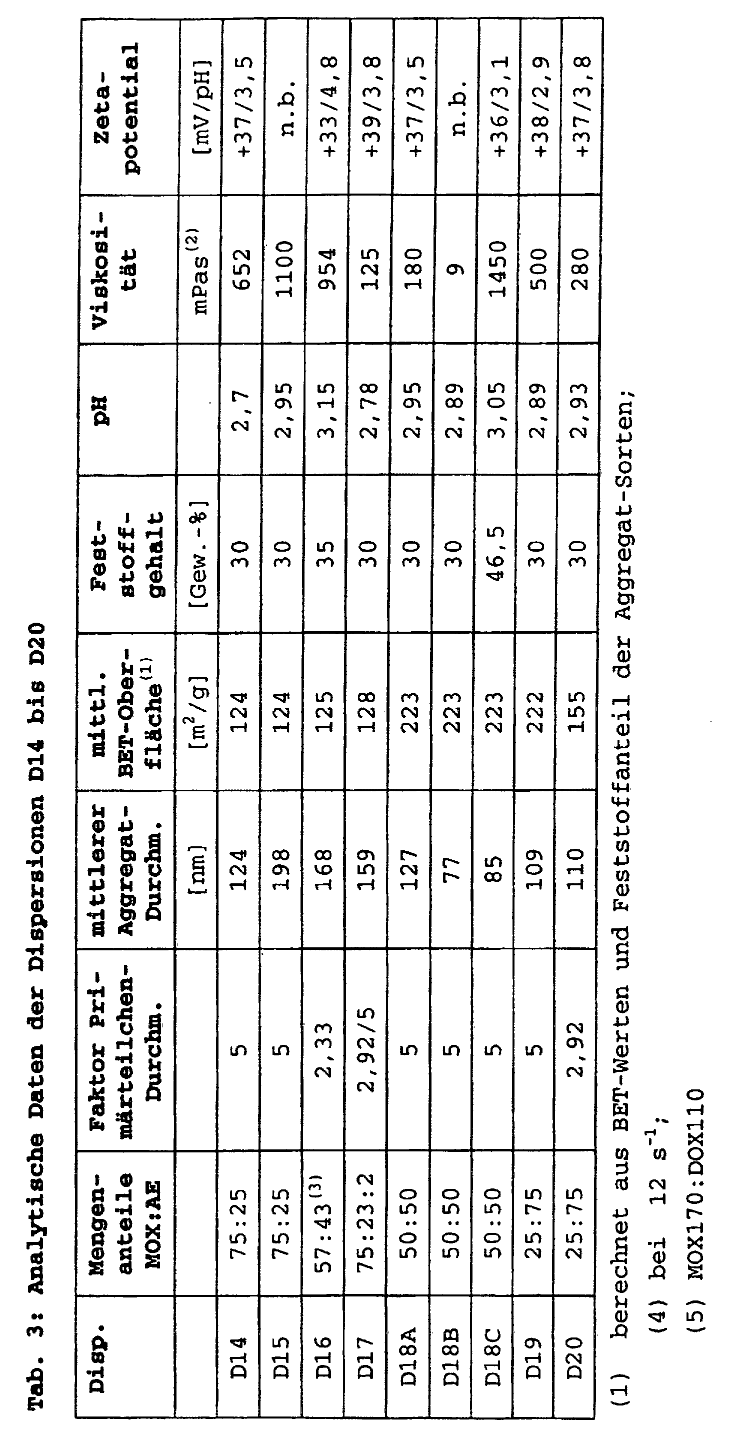

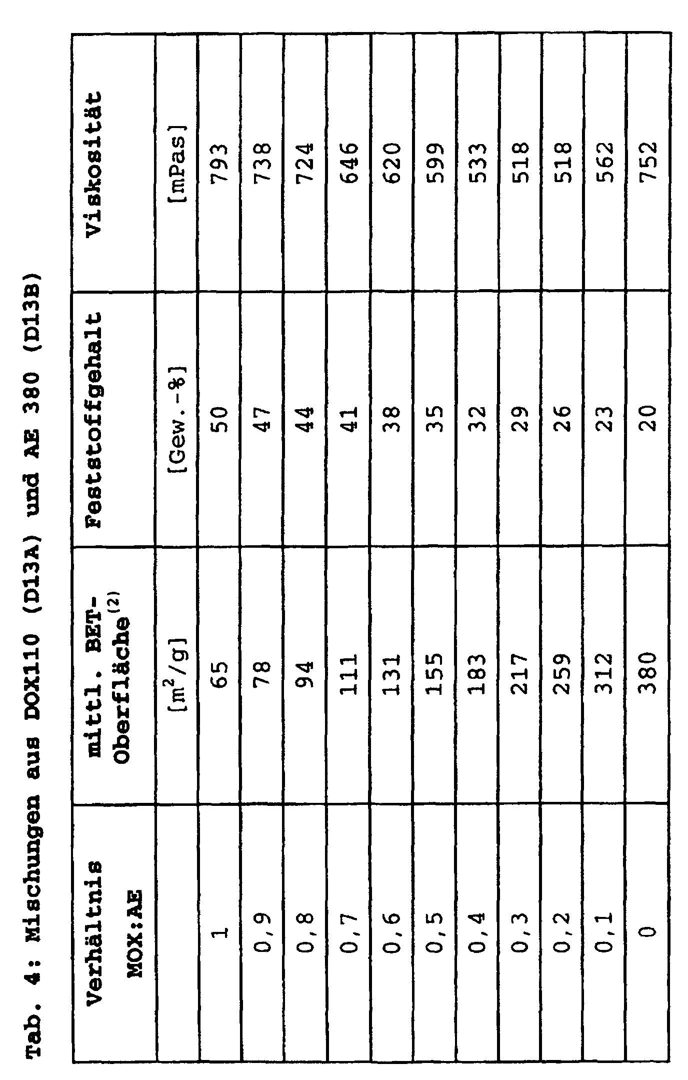

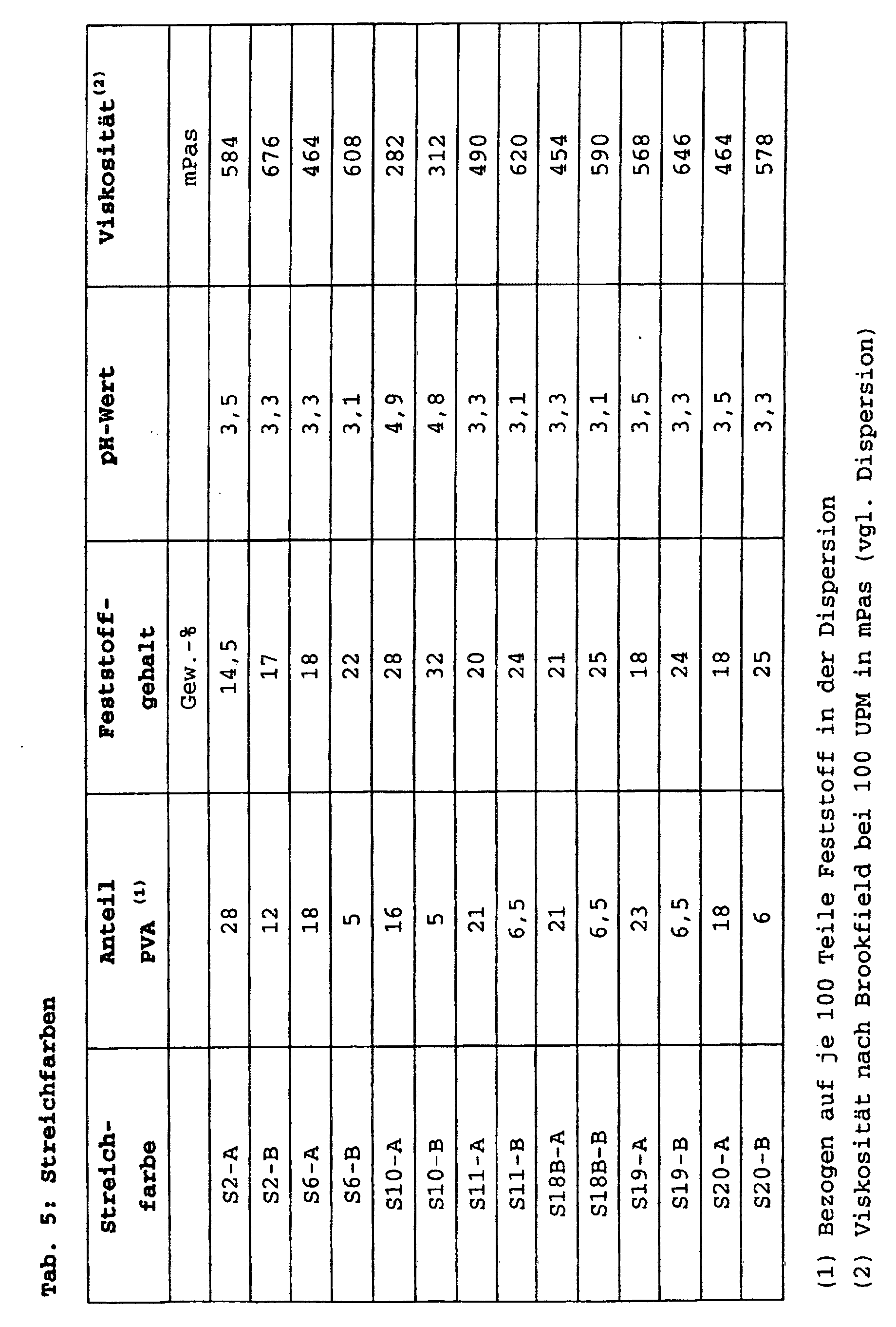

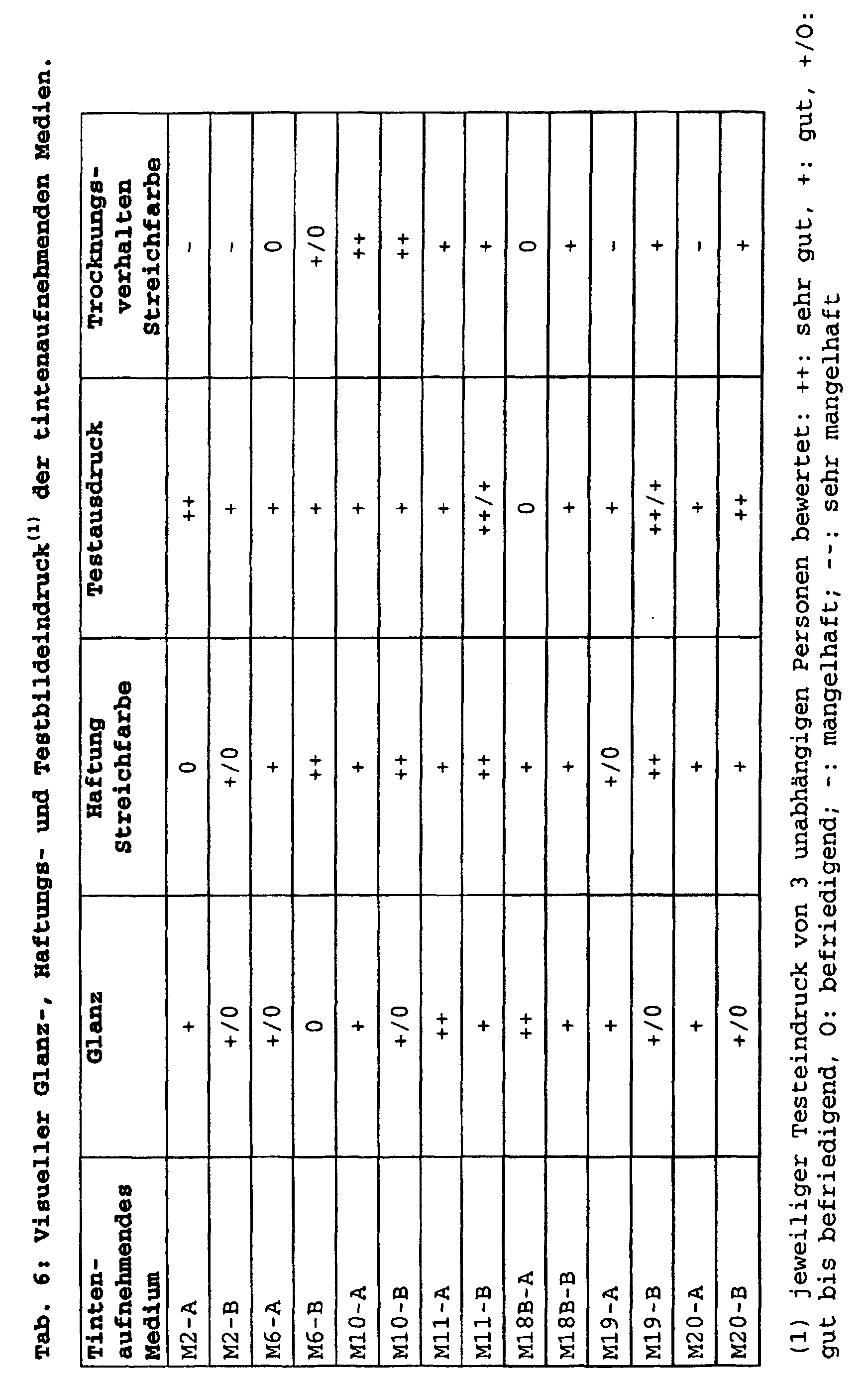

## Patentansprüche

1. Stabile, wässerige Dispersion enthaltend zwischen 20 und 80 Gew.-%, bezogen auf die Gesamtmenge der Dispersion, Metall- und/oder Metalloidoxidpulver,
- welche in Form von Aggregaten von Primärteilchen in der Dispersion vorliegen,
- wobei der mittlere Durchmesser der Aggregate zwischen 10 nm und 300 nm und
- der mittlere Durchmesser der Primärteilchen zwischen 5 und 50 nm liegt,
**dadurch gekennzeichnet, dass**
- das Pulver mindestens zwei Pulverarten umfasst,
- wobei die Pulverarten bei gegebenem pH-Wert der Dispersion das gleiche Vorzeichen der Oberflächenladung aufweisen und
- ein Zeta-Potential haben, das eine elektrostatische Abstoßung der Teilchen bewirkt, welche größer ist als die van-der-Waals Anziehung der Pulver und
- die mittleren Durchmesser der Primärteilchen zwischen zwei Pulverarten sich mindestens um den Faktor 1,5 unterscheiden und
- in der Dispersion der mittlere Aggregatdurchmesser der zweiten und weiterer Pulverarten 60 bis 150% der Größe der ersten Pulverart aufweist und
- jede Pulverart zu wenigstens 1 Gew.-% in der Dispersion vorliegt.

2. Dispersion nach Anspruch 1, **dadurch gekennzeichnet, dass** zwei Pulverarten vorliegen.

3. Dispersion nach den Ansprüchen 1 oder 2, **dadurch gekennzeichnet, dass** das gewichtsmäßige Verhältnis von Pulverart 1 zu Pulverart 2 zwischen 10:90 und 90:10 beträgt.

4. Dispersion nach den Ansprüchen 1 bis 3, **dadurch gekennzeichnet, dass** sich die mittleren Primärteilchendurchmesser der Pulverarten mindestens um den Faktor 2 unterscheiden.

5. Dispersion nach den Ansprüchen 1 bis 4, **dadurch gekennzeichnet, dass** sich der mittlere Aggregatdurchmesser der zweiten und weiterer Pulverarten 80 bis 120 % der Größe der ersten Pulverart aufweist.

6. Dispersion nach den Ansprüchen 1 bis 5, **dadurch gekennzeichnet, dass** die Pulverarten flammenhydrolytisch hergestellte Metall- oder Metalloidoxidpulver sind.

7. Dispersion nach den Ansprüchen 1 bis 6, **dadurch gekennzeichnet, dass** die Pulverart flammenhydrolytisch hergestelltes Siliciumdioxid in kationisierter Form ist.

8. Dispersion nach den Ansprüchen 1 bis 7, **dadurch gekennzeichnet, dass** mindestens eine Pulverart ein Mischoxidpulver ist.

9. Dispersion nach Anspruch 8, **dadurch gekennzeichnet, dass** das Mischoxidpulver ein flammenhydrolytisch hergestelltes Pulver ist.

10. Dispersion nach den Ansprüchen 1 bis 9, **dadurch gekennzeichnet, dass** deren Viskosität einen Wert von 1500 mPas bei einer Schergeschwindigkeit von 12 s⁻¹ und einer Temperatur von 23°C nicht überschreitet.

11. Dispersion nach den Ansprüchen 1 bis 10, **dadurch gekennzeichnet, dass** sie Substanzen zur pH-Wert-Einstellung, wie Säuren, Basen oder Puffersysteme, Additive zur Stabilisierung der Dispersion, wie Salze, oberflächenaktive Stoffe, organische Lösungsmittel, Bakterizide und/oder Fungizide enthält.

12. Verfahren zur Herstellung der Dispersion nach den Ansprüchen 1 bis 11, **dadurch gekennzeichnet, dass** die Pulver mittels einer Dispergiervorrichtung in einer wässerigen Dispersion getrennt voneinander dispergiert werden und anschließend vereinigt werden, oder dass die Pulver der Pulverarten zunächst physikalisch vermischt und dann zusammen dispergiert werden, oder dass die die Pulver der Pulverarten portionsweise in Dispergiervorrichtung gegeben und dann zusammen dispergiert werden.

13. Streichfarbe zur Bildung einer Tintenaufnahmeschicht unter Verwendung der Dispersion gemäß der Ansprüche 1 bis 11 und zumindest einem hydrophilen Bindemittel.

14. Streichfarbe nach Anspruch 13, **dadurch gekennzeichnet, dass** der Gehalt an Pulvern zwischen 10 und 60 Gew.-% liegt.

15. Streichfarbe nach den Ansprüchen 13 oder 14, **dadurch gekennzeichnet, dass** der Anteil an Bindemittel, bezogen auf die Pulver, zwischen 3 und 150 Gew.% beträgt.

16. Verfahren zur Herstellung der Streichfarbe gemäß den Ansprüchen 13 bis 15, **dadurch gekennzeichnet, dass** zu einer wässerigen Lösung des hydrophilen Bindemittels, der gegegebenenfalls noch weitere Additive zugesetzt sein können, unter Rühren die erfindungsgemäße Dispersion zugibt und gegebenenfalls verdünnt, bis sich das gewünschte Verhältnis von Mischoxidpartikel und Binder und der gewünschte Gesamtfeststoffgehalt einstellt.

17. Aufnahmemedium unter Verwendung der Streichfarbe gemäß den Ansprüchen 13 bis 15 und eines Trägers.

18. Verfahren zur Herstellung des Aufnahmemediums nach Anspruch 17, **dadurch gekennzeichnet, dass** die Streichfarbe auf den Träger aufgebracht und getrocknet wird.

## Claims

1. Stable, aqueous dispersion containing between 20 and 80 wt.%, relative to the total amount of dispersion, of metal oxide and/or non-metal oxide powders,
- which are present in the dispersion in the form of aggregates of primary particles,
- whereby the average diameter of the aggregates is between 10 nm and 300 nm and
- the average diameter of the primary particles is between 5 and 50 nm,
**characterised in that**
- the powder comprises at least two types of powder,
- whereby the powder types at a given pH of the dispersion display the same surface charge sign and
- have a zeta potential that gives rise to an electrostatic repulsion between the particles that is greater than the van der Waals attraction between the powders and
- the average diameters of the primary particles differ by a factor of at least 1.5 between two powder types and
- in the dispersion the average aggregate diameter of the second and additional powder types displays 60 to 150% of the size of the first powder type and
- each powder type is present in the dispersion in a quantity of at least 1 wt.%.

2. Dispersion according to claim 1, **characterised in that** there are two types of powder present.

3. Dispersion according to claims 1 or 2, **characterised in that** the ratio by weight of powder type 1 to powder type 2 is between 10:90 and 90:10.

4. Dispersion according to claims 1 to 3, **characterised in that** the average primary particle diameters of the powder types differ by a factor of at least 2.

5. Dispersion according to claims 1 to 4, **characterised in that** the average aggregate diameter of the second and additional powder types displays 80 to 120 % of the size of the first powder type.

6. Dispersion according to claims 1 to 5, **characterised in that** the powder types are metal oxide or non-metal oxide powders produced by flame hydrolysis.

7. Dispersion according to claims 1 to 6, **characterised in that** the powder type is silicon dioxide in cationised form produced by flame hydrolysis.

8. Dispersion according to claims 1 to 7, **characterised in that** at least one powder type is a mixed oxide powder.

9. Dispersion according to claim 8, **characterised in that** the mixed oxide powder is a powder produced by flame hydrolysis.

10. Dispersion according to claims 1 to 9, **characterised in that** its viscosity does not exceed a value of 1500 mPas at a shear rate of 12 s⁻¹ and a temperature of 23°C.

11. Dispersion according to claims 1 to 10, **characterised in that** it contains substances to adjust the pH, such as acids, bases or buffer systems, additives to stabilise the dispersion, such as salts, surface-active substances, organic solvents, bactericides and/or fungicides.

12. Process for the production of the dispersion according to claims 1 to 11, **characterised in that** the powders are dispersed separately in an aqueous dispersion by means of a dispersing device and then combined, or that the powders of the powder types are first physically mixed and then dispersed together, or that the powders of the powder types are introduced into the dispersing device in portions and then dispersed together.

13. Coating composition to form an ink-absorptive layer using the dispersion according to claims 1 to 11 and at least one hydrophilic binder.

14. Coating composition according to claim 13, **characterised in that** the content of powders is between 10 and 60 wt.%.

15. Coating composition according to claims 13 or 14, **characterised in that** the content of binder, relative to the powders, is between 3 and 150 wt%.

16. Process for the production of the coating composition according to claims 13 to 15, **characterised in that** the dispersion according to the invention is added with stirring to an aqueous solution of the hydrophilic binder, to which additional additives can also optionally be added, and optionally diluted, until the desired ratio of mixed oxide particles and binder and the desired total solids content is established.

17. Recording medium using the coating composition according to claims 13 to 15 and a support.

18. Process for the production of the recording medium according to claim 17, **characterised in that** the coating composition is applied to the support and dried.

## Revendications

1. Dispersion aqueuse stable, contenant entre 20 et 80 % en poids, par rapport à la quantité totale de dispersion, de poudres d'oxyde métallique et/ ou d'oxyde métalloïdique,
- qui sont présentes sous forme d'agrégats de particules primaires dans la dispersion,
- le diamètre moyen des agrégats étant compris entre 10 nm et 300 nm, et
- le diamètre moyen des particules primaires étant compris entre 5 et 50 nm,
**caractérisée en ce que**
- la poudre renferme au moins deux types de poudre,
- les types de poudre présentant, à un pH donné de la dispersion, le même signe de charge superficielle et
- ayant un potentiel zêta qui provoque une répulsion électrostatique des particules qui est supérieure à l'attraction de van der Waals de la poudre, et
- les diamètres moyens des particules primaires entre deux types de poudre se distinguant au moins par le facteur 1,5 et
- dans la dispersion, le diamètre moyen des agrégats des deuxièmes types de poudre et suivants présentant 60 à 150 % de la taille du premier type de poudre, et
- chaque type de poudre étant présent dans la dispersion à raison d'au moins 1 % en poids.

2. Dispersion selon la revendication 1,
**caractérisée en ce que**
deux types de poudre sont présents.

3. Dispersion selon les revendications 1 ou 2,
**caractérisée en ce que**
le rapport pondéral du type de poudre 1 au type de poudre 2 est compris entre 10:90 et 90:10.

4. Dispersion selon les revendications 1 à 3,
**caractérisée en ce que**
les diamètres moyens des particules primaires des types de poudre diffèrent au moins du facteur 2.

5. Dispersion selon les revendications 1 à 4,
**caractérisée en ce que**
le diamètre moyen des agrégats des deuxièmes et autres types de poudre présente 80 à 120 % de la taille du premier type de poudre.

6. Dispersion selon les revendications 1 à 5,
**caractérisée en ce que**
les types de poudre sont des poudres d'oxyde métallique ou métalloïdique fabriquées par hydrolyse à la flamme.

7. Dispersion selon les revendications 1 à 6,
**caractérisée en ce que**
le type de poudre est un dioxyde de silicium fabriqué par hydrolyse à la flamme sous forme cationisée.

8. Dispersion selon les revendications 1 à 7,
**caractérisée en ce qu'**
au moins un type de poudre est une poudre d'oxyde mixte.

9. Dispersion selon la revendication 8,
**caractérisée en ce que**
la poudre d'oxyde mixte est une poudre fabriquée par hydrolyse à la flamme.

10. Dispersion selon les revendications 1 à 9,
**caractérisée en ce que**
sa viscosité dépasse une valeur de 1500 mPas à une vitesse de cisaillement de 12 s⁻¹ et à une température de 23°C.

11. Dispersion selon les revendications 1 à 10,
**caractérisée en ce qu'**
elle contient des substances permettant l'ajustement du pH telles que des acides, des bases ou des systèmes tampons, des additifs permettant la stabilisation de la dispersion, tels que des sels, des substances tensioactives, des solvants organiques, des bactéricides et/ou des fongicides.

12. Procédé de fabrication de la dispersion selon les revendications 1 à 11,
**caractérisé en ce que**
les poudres sont dispersées séparément les unes des autres au moyen d'un dispositif de dispersion dans une dispersion aqueuse puis réunies ou les poudres des types de poudre sont d'abord mélangées physiquement puis dispersées ensemble, ou les poudres des types de poudre sont placées par portions dans le dispositif de dispersion puis dispersées ensemble.

13. Enduit de couchage permettant la formation d'une couche d'absorption de l'encre utilisant la dispersion selon les revendications 1 à 11 et au moins un liant hydrophile.

14. Enduits de couchage selon la revendication 13,
**caractérisée en ce que**
la teneur en poudres est comprise entre 10 et 60 % en poids.

15. Enduit de couchage selon les revendications 13 ou 14,
**caractérisé en ce que**
la proportion de liant, par rapport aux poudres, est comprise entre 3 et 150 % en poids.

16. Procédé de fabrication de l'enduit de couchage selon les revendications 13 à 15,
**caractérisé en ce qu'**
on ajoute à une solution aqueuse du liant hydrophile, à laquelle peuvent être éventuellement additionnés d'autres additifs, la dispersion selon l'invention sous agitation, et on la dilue le cas échéant jusqu'à l'obtention du rapport souhaité entre les particules d'oxyde mixte et les liants et la teneur souhaitée en matières solides.

17. Milieu d'absorption utilisant l'enduit de couchage selon les revendications 13 à 15 et un support.

18. Procédé de fabrication du milieu d'absorption selon la revendication 17,
**caractérisé en ce que**
l'enduit de couchage est appliquée sur le support et séchée.
